# EUROPÄISCHE PATENTANMELDUNG

(11) **EP 1 118 524 A2**
(43) Veröffentlichungstag der Anmeldung: **25.07.2001**
(21) Anmeldenummer: 00128681.4
(22) Anmeldetag: 29.12.2000
(51) Int. Cl.: B62B 3/16

(54) **Transportvorrichtung**

(30) Priorität: 19.01.2000 DE 10002202
(71) Anmelder: Ludwig Gebhardt GmbH & Co. Betriebs KG, 93413 Cham (DE)
(72) Erfinder: Gebhardt, Max, 93413 Cham (DE)
(74) Vertreter: Bergmeier, Werner, Dipl.-Ing.

(57) **Zusammenfassung**

Eine Transportvorrichtung weist eine Bodenplatte (2,102) und mehrere daran befestigte Laufrollen (4,5,103) auf. An der Bodenplatte (2,102) sind Mulden (11,105) und/oder Öffnungen (10,105) und/oder Rippen (111) vorgesehen, welche zum sicheren Stapeln von weiteren Bodenplatten (2,102) und/oder von Seitenwänden (104) der Transportvorrichtung dienen. Weiter sind Einrichtungen (10,11) an der Bodenplatte (2) zum Stapeln mehrerer Bodenplatten (2) übereinander vorgesehen, so daß sie wahlweise ein versetztes oder paralleles Stapeln der Bodenplatten (2) übereinander erlauben.

## Beschreibung

Die vorliegende Erfindung betrifft eine Transportvorrichtung gemäß Oberbegriff des Anspruchs 1.

Aus der GB 1595210 ist eine gattungsgemäße Transportvorrichtung bekannt. Die Transportvorrichtung ist eine Roliplatte mit an deren Unterseite angeordneten Laufrollen. Zwei dieser Laufrollen sind sogenannte Bockrollen, d.h. nicht lenkbare Rollen, während die beiden anderen Laufrollen Lenkrollen sind. Damit ist ein besonders einfaches Manövrieren der Transportvorrichtung möglich. An der Bodenplatte der Transportvorrichtung sind zwei Gitter angeordnet, um ein Stapeln von Gegenständen auf der Rollplatte zu erleichtern. Die Gegenstände werden auf den Rollplatten beispielsweise im Großhandel komissioniert und mit der komissionierten Ware zu Lebensmittelmärkten auf LKW transportiert. Wenn die Transportvorrichtungen in den Lebensmittelmärkten entleert sind, werden sie üblicherweise zu dem Großhandel mittels LKW zurücktransportiert. Um hier möglichst wenig Lagerfläche in Anspruch nehmen zu müssen, ist bei der vorliegenden britischen Patentschrift vorgesehen, daß an den Rollplatten die seitlichen Gitter abmontiert werden. Die Rollplatten mit Rollen werden dann auf einer noch kompletten Transportvorrichtung übereinander gestapelt. Diese Stapelung erfolgt weitgehend parallel, so daß die Rollplatten im wesentlichen übereinander zu stehen kommen. Um eine stabile Stapelung zu ermöglichen sind seitlich an den Rollplatten Einkerbungen vorgesehen, welche mit den Gittern der Gitterstäbe zusammenwirken. Nachteilig bei dieser Vorrichtung ist es, daß die Gitterstäbe sehr stabil bzgl. eines seitlichen Ausweichens ausgebildet sein müssen, da ansonsten die Gefahr besteht, daß die Gitterstäbe aus den Einkerbungen der Bodenplatten entweichen und somit die übereinander gestapelten Bodenplatten herabfallen. Es sind daher für einen sicheren Transport weitere Befestigungsmittel vorzusehen, um die Gitterstäbe in ständigen Kontakt mit den aufeinander gestapelten Bodenplatten zu halten.

Die Transportvorrichtungen sind als Rollboxen seit langem bekannt. Sie bestehen in der Regel aus einer Bodenplatte aus Kunststoff, Holz oder Metall. Üblicherweise ist an zwei einander gegenüberliegenden Seitenkanten der Bodenplatte jeweils eine Seitenwand, die als Aufsteckrahmen ausgebildet ist, angeordnet. Die Aufsteckrahmen bestehen aus einem Oberrohr, das sich über die Ober- und die Seitenkanten der Seitenwand erstreckt, sowie aus einem Unterrohr, das zwischen die Enden des Oberrohrs eingebracht ist. Derartige Rollboxen mit Seitenwänden sind von der Anmelderin in großem Umfang eingesetzt.

Durch die von der Anmelderin vertriebenen Rollbox G2000 ist es bekannt, daß die Bodenplatten ohne dazugehörigen seitlichen Gittern versetzt übereinander gestapelt rücktransportiert werden können. Durch das versetzte Stapeln ist ein sicherer und stabiler Transport der Bodenplatten möglich. In manchen Anwendungsfällen ist es allerdings nachteilig, daß durch die versetzte Stapelung eine größere Grundfläche als die der einzelnen Bodenplatte benötigt wird. Dies kann dazu führen, daß die Ausnutzung der Ladefläche eines LKWs nicht optimal möglich ist. Für die Stapelung müssen darüber hinaus die Bodenplatten verdreht zueinander angeordnet werden, so daß vor dem Stapeln die Bodenplatten unter Umständen in die richtige Position gebracht werden müssen.

Eine gattungsgemäße Transportvorrichtung ist beispielsweise aus der EP 0 487 147 A1 bekannt. Die Bodenplatte weist hierfür an ihren Ecken Öffnungen auf, in welche die Enden der Oberrohre der Seitenwände eingesteckt werden. Die über die Seitenwände hinausragenden Oberrohre bzw. Stifte sorgen für einen weitgehend sicheren Halt der Seitenwände auf der Bodenplatte. Durch die Seitenwände ist es möglich eine Vielzahl von Gütern auf der Transportvorrichtung sicher zu transportieren.

Eine andere Art der Befestigung der Seitenwände auf der Bodenplatte zeigt die GB 1 595 210. Dort werden die Seitenwände nicht mittels vorstehender Rohre, sondern mit einer Art Bügel an der Bodenplatte befestigt. Auch hier wird eine weitgehend sichere Befestigung der Seitenwände an der Bodenplatte der Transportvorrichtung bewirkt.

Um die Transportvorrichtungen möglichst platzsparend wieder zurück zum Absender der Transportvorrichtungen transportieren zu können, sollen sie möglichst platzsparend gestapelt werden können. Hierzu werden die Seitenwände abgenommen und die Bodenplatten aufeinander gestapelt. Um die abmontierten Seitenwände ebenfalls rücktransportieren zu können werden diese auf einer Transportvorrichtung, welche nicht zerlegt ist, gestaffelt, meist zwischen zwei Seitenwänden aufgestellt. Nachteilig ist es hierbei, daß die gestaffelten Seitenwände mit Riemen an den feststehenden Seitenwänden befestigt werden müssen, um ein Herabfallen oder Verrutschen von der Bodenplatte während des Beladens und/oder des Transports zu vermeiden.

Ein weiterer Nachteil ist es, daß bei Bodenplatten, welche große Öffnungen aufweisen, die über die Seitenwände hervorstehenden Rohre oder Stifte sich in den Öffnungen verhaken und somit ein Entleeren der gestaffelten Seitenwände erschweren. Insbesondere wenn der Zwischenraum zwischen zwei feststehenden Seitenwänden nicht vollständig mit gestaffelten Seitenwänden ausgefüllt wird, ist eine besonders instabile Lagerung der Seitenwände gegeben, da diese ohne die zuvor beschriebene Verzurrung leicht verrutschen und somit einen erhöhten Entladeaufwand verursachen.

Aufgabe der vorliegenden Erfindung ist es daher den Rücktransport entleerter gattungsgemäßer Transportvorrichtungen zu erleichtern. Es soll eine stabile und schnelle Stapelung von Bodenplatten für den Transport auf LKWs ermöglicht werden. Die Bodenplatten sollen dabei ohne großen Aufwand positionsgenau übereinander gestapelt werden können. Die Seitenwände sollen ebenfalls stabil auf einer Transportvorrichtung zurücktransportiert werden können.

Die Aufgabe wird gelöst durch die Merkmale des Patentanspruchs 1. Sind an der Bodenplatte Mulden und/oder Öffnungen und/oder Rippen vorgesehen, welche zum sicheren Stapeln von weiteren Bodenplatten und/oder von Seitenwänden der Transportvorrichtung dienen, so kann die Transportvorrichtung zerlegt und gestapelt und gestaffelt platzsparend transportiert werden.

Bei einer gattungsgemäßen Transportvorrichtung sind die Einrichtungen zum Stapeln mehrerer Bodenplatten übereinander derart an der Bodenplatte angeordnet, daß sie wahlweise ein versetztes oder paralleles Stapeln der Bodenplatten übereinander erlauben. Hierdurch wird in vorteilhafter Weise, je nach den vorliegenden Raumverhältnissen, die Möglichkeit geschaffen ein versetztes oder paralleles Stapeln durchzuführen. Es kann dabei individuell entschieden werden, ob ein stabiles versetztes oder ein bzgl. der Grundfläche platzsparendes paralleles Stapeln der Bodenplatten übereinander gewählt wird. In jedem Falle wird mit den erfindungsgemäßen Einrichtungen eine stabile Lagerung der Bodenplatten in dem Stapel erreicht, so daß zusätzliche Sicherungsmaßnahmen weitgehend vermeidbar sind. Die Einrichtungen an der Bodenplatte sind jeweils so ausgestaltet, daß sie das sichere Stapeln ermöglichen, ohne daß die Gefahr eines Herabstürzens beim Transport auf einem LKW zu befürchten ist. Durch das wahlweise versetzte oder parallele Stapeln der Bodenplatten wird die Einsatzmöglichkeit der Transportvorrichtung erstmals gegenüber dem Stand der Technik deutlich vergrößert. Es wurde erstmals erkannt, daß das wahlweise versetzt oder parallele Stapeln in der Handhabung der Bodenplatten deutliche Vorteile bringt, da die Bedienungsperson individuell, bspw. je nach den Platzverhältnissen auf dem LKW bzgl. der Grundfläche und Höhe oder aufgrund der Körpergröße der Bedienungsperson, entscheiden kann, welche Stapelung er wählt.

Vorteilhafterweise sind die Einrichtungen auf der Oberfläche der Bodenplatte angeordnet und nehmen zwei Laufrollen zum versetzten Stapeln der Bodenplatten auf. Die Einrichtungen umgreifen dabei vorteilhafterweise die Laufrollen, so daß ein Verschieben der übereinander gestapelten Bodenplatten zueinander weitgehend ausgeschlossen ist.

Zum parallelen Stapeln ist es vorteilhaft, wenn die Einrichtungen derart an der Bodenplatte angeordnet sind, daß sie sämtliche Laufrollen der Bodenplatte aufnehmen können. Durch die Führung von allen Laufrollen ist die ansich etwas instabilere parallele Stapelung ebenfalls sehr vorteilhaft realisierbar, da ausreichend Festigkeit der übereinandergestapelten Bodenplatten durch die Fixierung an allen Laufrollen erreicht wird. Es ist dabei im allgemeinen ausreichend, daß die Fixierung der einzelnen Laufrolle weniger stark ist als beim versetzten Stapeln.

Besonders einfach in der Ausführung ist es, wenn die Einrichtung eine Öffnung zur Aufnahme einer Laufrolle ist. Die Öffnung kann in der Bodenplatte, welche meist aus Kunststoff hergestellt sein wird, sehr einfach realisiert werden. Die Laufrolle versinkt dabei in der Öffnung und fixiert die mit der Laufrolle verbundene Bodenplatte sicher auf der unteren Bodenplatte mit den Seitenwänden der Öffnung. Vorteilhafterweise ist die Öffnung so tief, daß die Laufrolle bis etwa zu ihrer Achse hin in der Öffnung versinkt. Hierdurch wird eine besonders stabile Fixierung der Bodenplatte ermöglicht.

Alternativ oder zusätzlich zu der Öffnung kann die Einrichtung eine Mulde zur Aufnahme einer Laufrolle sein. Die Mulde hat den Vorteil, daß die Laufrolle mit ihrer Umfangsfläche auf der Grundfläche der Mulde aufsteht. Es ist ein Verhaken der Laufrolle und damit der Bodenplatten ineinander sicher zu vermeiden.

Vorteilhaft ist es, wenn die Breite der Öffnung und/oder Mulde im wesentlichen der Breite der Laufrolle entspricht. Hierdurch wird auch eine seitliche Fixierung der Bodenplatten übereinander erzielt, wodurch der Stapel sehr stabil zu bilden ist.

Um ein Verhaken der Laufrolle in der Öffnung und/oder Mulde zu vermeiden ist es besonders vorteilhaft, wenn die Öffnung und/oder Mulde seitlich der aufgenommenen Laufrolle Rippen aufweist. Diese Rippen erlauben einerseits die seitliche Führung der Laufrollen und damit der Bodenplatte. Andererseits wird hierdurch in vorteilhafter Weise ermöglicht, daß ein Verhaken der Laufrollen in der Öffnung und/oder Mulde weitgehend auszuschließen ist. Die Rippen bewirken weiterhin, daß im Falle einer Verschmutzung der Öffnung und/oder Mulde der Schmutz in die Zwischenräume zwischen die Rippen gedrückt wird und somit trotzdem ein stabiles Stapeln der Bodenplatten ermöglicht ist.

Weisen die Rippen eine die Öffnung und/oder Mulde nach unten verjüngende Schräge auf, so wird in vorteilhafter Weise eine zusätzliche Maßnahme ergriffen, um ein einfaches und hakelfreies Einsetzen und Entnehmen der Laufrolle in die Öffnung und/oder Mulde zu ermöglichen.

Besonders vorteilhaft und erfinderisch ist es, wenn die Einrichtung derart ausgebildet ist, daß sie die Laufrolle in verschiedenen Positionen aufnehmen kann. Hierdurch wird ein Ausrichten der Laufrollen, insbesondere der Lenkrollen beim Stapeln vermieden. Die Drehrichtung der Bodenplatten aufeinander muß nicht in einer definierten Position sein. Die Bodenplatten können beispielsweise um 180° zueinander verdreht sein, wodurch die Bockrolle einmal links im Stapel und einmal rechts im Stapel positioniert sein kann. Besonders vorteilhaft ist es dabei, wenn die Lenkrollen beim Stapeln in verschiedenen Positionen in der Einrichtung aufgenommen werden können. Hierdurch ist das zeitaufwendige Ausrichten der Lenkrollen nicht mehr erforderlich. Insbesondere bei einem höheren Stapel kann es schwierig sein, die Lenkrollen in die richtige Position zu bringen, wenn nur eine oder wenige Positionen der Lenkrollen zulässig sind, um von der Einrichtung aufgenommen werden zu können. Diese vorteilhafte Ausführung ermöglicht ein besonders handhabungsfreundliches Stapeln der Transportvorrichtungen übereinander.

Um eine besonders stabile Stapelung zu erreichen ist in einer Ausführung vorgesehen, daß beim parallelen Stapeln die Lenkrollen in Richtung auf die Bockrollen oder aufeinander zu zeigen. Insbesondere durch die Positionierung, bei welcher die Lenkrollen aufeinander zu zeigen, d.h. die Lenkrollen in Richtung zur Mitte der Bodenplatte hin zeigen, wird eine besonders rutschsichere Aufeinanderstapelung der Platten ermöglicht. Bei dieser Positionierung der Rollen werden von den Bockrollen die Seitenflächen in orthogonaler Richtung in Bezug auf die Seitenflächen der Lenkrollen von der Öffnung oder Mulde beaufschlagt. Dadurch wird ein Herabrollen oder Herausrollen der Laufrollen aus der Mulde und/oder Öffnung vermieden. Der Stapel ist somit auch in extremen Situationen vor dem Zusammenstürzen gesichert.

Um eine Verschmutzung des Bedienungspersonals oder des zu transportierenden Gutes zu vermeiden, ist vorgesehen, daß die Mulde eine oder mehrere Wasserablauföffnungen aufweist. Wenn die Transportvorrichtungen im Außenbereich gelagert werden und angeregnet werden, ist es somit sichergestellt, daß sich in der Mulde keine Wasserpfütze bildet, welche beim Aufeinanderstapeln aus der Mulde fließen könnte und somit das Bedienungspersonal verschmutzt.

Besonders vorteilhaft ist es, wenn die Einrichtungen derart angeordnet sind, daß sie eine lageunabhängige Stapelung von Bodenplatten ermöglichen. Das bedeutet, daß die Bodenplatten entweder um 180° oder bei besonderen Ausführungen auch um 90° zueinander verdreht übereinander gestapelt werden können. Hierdurch wird das Bedienungspersonal entlastet, da keine Drehung der Bodenplatten vor der Stapelung erfolgen muß.

Als besonders vorteilhafte Ausführungen für die Öffnung und/oder Mulde für die Lenkrolle haben sich +-, T- oder L-förmig ausgebildete Formen erwiesen. Hierdurch kann die Lenkrolle in verschiedenen Positionen in die Einrichtung eingebracht werden, wodurch ein spezielles Ausrichten der Lenkrolle stark vereinfacht wird. Darüber hinaus wird die Stabilität des Stapels erhöht, wenn die Lenkrolle nicht in gleicher Richtung wie die Bockrolle positioniert ist, da die Seitenflächen der Rollen eine höhere Stabilität bewirken als die Umfangsflächen der Rollen in der Einrichtung. Die einzelnen Schenkel der +- , T- oder L-förmigen Öffnung und/oder Mulde können in beliebiger, vorzugsweise aber rechtwinkeliger Ausrichtung zueinander sind. Insbesondere bei rechtwinkeliger Anordnung wird eine besonders stabile Stapelung erreicht.

Ist die Öffnung oder Mulde für die Lenkrolle kreis- oder kreisringförmig ausgebildet, insbesondere mit einem Maß, welches die Lenkrolle lediglich teilweise in der Öffnung oder Mulde versinken läßt, so kann die Lenkrolle in einer beliebigen Position während der Stapelung stehen. Dies ist die für das Bedienungspersonal einfachste Möglichkeit die Bodenplatten übereinander zu stapeln.

Insbesondere Bodenplatten aus Kunststoff weisen häufig Verstärkungen auf um eine höhere Tragfähigkeit der Transportvorrichtung zu erzielen. Die Verstärkungen sind häufig Eisenprofile, welche in die Kunststoffbodenplatte eingefügt sind. Um die Verstärkungen ausreichend hoch und damit stabil ausbilden zu können ist es vorteilhaft, wenn sie derart an der Bodenplatte angeordnet sind, daß sie sich seitlich der Öffnung oder Mulde für die Laufrolle befinden. Hierdurch ist die Absenkung der Laufrolle in der Öffnung oder Mulde ausreichend tief für eine stabile Stapelung auszuführen und andererseits die Verstärkung ausreichend hoch zu wählen um eine hohe Tragfähigkeit der Transportvorrichtung zu erhalten.

Sind die Verstärkungen der Bodenplatte im Bereich der Öffnung oder Mulde für die Laufrolle angeordnet, so ist es vorteilhaft, wenn sie soweit unterhalb der Oberfläche der Bodenplatte sich befinden, daß die Öffnung oder Mulde eine ausreichende Führung für die Laufrolle bewirkt. Dies kann dadurch geschehen, daß die Verstärkung weniger hoch ausgebildet ist als im übrigen Bereich oder die Bodenplatte zumindest in diesem Bereich dicker gestaltet ist. Es kann auch die Verstärkung im Bereich der Öffnung oder Mulde verjüngt ausgebildet sein, um die Aufnahme der Laufrolle an dieser Stelle zu ermöglichen. In manchen Ausführungen kann es auch vorteilhaft sein, daß die Laufrolle direkt auf der Verstärkung aufsteht und somit die Verstärkung gleichzeitig die Führung der Laufrolle oder die Bodenfläche der Öffnung oder Mulde darstellt.

Ein besonders stabiler Transport der abmontierten Seitenwände wird dadurch erzielt, daß an der Bodenplatte in von der fest angeordneten Seitenwand abgewandter Richtung Positionierungshilfen angeordnet sind, um eine stabile Staffelung mehrerer einzelner Seitenwände zu deren Transport zu gewährleisten. Durch die Positionierungshilfen werden die gestaffelten Seitenwände in ihrer optimalen Lage zur Bodenplatte weitgehend festgehalten, ohne daß eine Gefahr der Verschiebung der gestaffelten Seitenwand auf der Bodenplatte besteht. Die Positionierungshilfen greifen dabei in bevorzugte Stellen der gestaffelten Seitenwände ein und bewirken somit die stabile Lagerung der Seitenwände auf der Bodenplatte. Dadurch, daß die Positionierungshilfen in von der feststehenden Seitenwand abgewandter Richtung angeordnet sind, ist es für die gestaffelten Seitenwände möglich, einerseits auf der Bodenplatte im Bereich der Positionierungshilfen zu stehen und andererseits an die an der Bodenplatte fest angeordnete Seitenwand angelehnt zu werden.

Besonders vorteilhaft ist es, wenn die Positionierungshilfen derart in Bezug auf die feststehende Seitenwand angeordnet sind, daß eine gewisse Schrägstellung der gestaffelten Seitenwände in Bezug zur feststehenden Seitenwand entsteht. Hierdurch wird eine noch stabilere Lage der gestaffelten Seitenwände erzielt, da ein Umkippen der Seitenwand durch die Schrägstellung eher vermieden wird. Diese Schrägstellung ist entweder dadurch zu erzielen, daß die erste Positionierungshilfe von der feststehenden Seitenwand in einem wesentlich größeren Abstand angeordnet ist als die Dicke der Seitenwand ist, so daß die Schrägstellung der gestaffelten Seitenwand entsteht. Die Schrägstellung kann allerdings auch dadurch erfolgen, daß die erste Positionierungshilfe von der feststehenden Seitenwand aus gesehen nicht zur Abstützung der gestaffelten Seitenwand verwendet wird.

Die Positionierungshilfen wirken vorzugsweise mit der Unterseite der Seitenwand zusammen. Das bedeutet in den meisten Fällen, daß sie mit den Befestigungseinrichtungen der Seitenwände, welche zur Befestigung der Seitenwand an der Bodenplatte vorgesehen sind, zusammenwirken. Diese Befestigungseinrichtungen sind wie im Stand der Technik bereits oben beschrieben Rohre, Stifte, Bügel oder ähnliche Einrichtungen, welche an der Unterseite der Seitenwände angeordnet sind.

Besonders vorteilhaft ist es, wenn die Positionierungshilfen in beiden Richtungen, d.h. in x- und y-Richtung auf der Bodenplatte wirken. Die Positionierungshilfen bewirken dabei, daß die gestaffelten Seitenwände am Herabfallen von der Bodenplatte gehindert sind. Dies ist einerseits durch die Positionierung der Seitenwand in Richtung der Längsseite der feststehenden Seitenwand, als auch im rechten Winkel hierzu gewährleistet. Es wird damit zuverlässig vermieden, daß die gestaffelten Seitenwände einerseits von der feststehenden Seitenwand wegrutschen und andererseits, daß sie in Längsrichtung der feststehenden Seitenwand von der Bodenplatte abrutschen und somit ein Herabfallen der gestaffelten Seitenwände von der Transportvorrichtung bewirken.

Sind die Positionierungshilfen im wesentlichen in einem gleichen Abstand voneinander angeordnet, so wird eine gleichmäßige Staffelung der Seitenwände ermöglicht. Die Kraft der gestaffelten Seitenwände wird dabei auch gleichmäßig auf die Positionierungshilfen verteilt, wodurch eine zusätzliche Sicherheit vor dem Abrutschen der gestaffelten Seitenwände geschaffen wird.

Als besonders vorteilhaft hat sich herausgestellt, daß die Positionierungshilfen Öffnungen in der Bodenplatte sind, in welche die gestaffelten Seitenwände eingreifen. Die Öffnungen sind äußerst kostengünstig herzustellen und dienen gleichzeitig als Wasserablauf für die Bodenplatte. Bei einer entsprechenden Gestaltung der Öffnungen in Bezug auf die gestaffelten Seitenwände, sowohl bzgl. ihrer Größe, als auch bzgl. ihrer Position auf der Bodenplatte ist eine besonders einfache und zuverlässige Ausführung der Positionierungshilfen geschaffen.

Eine besonders einfache Staffelung der Seitenwände ist zu erzielen, wenn die Seitenwand ein Aufsteckrahmen ist, welcher mittels über den Aufsteckrahmen nach unten hervorstehender Rohre, Bügel oder anderer Befestigungsmittel an der Bodenplatte eingesteckt oder befestigt ist. Diese überstehenden Rohre oder anderen Befestigungsmittel sind dann besonders vorteilhaft in Verbindung mit den Positionierungshilfen einzusetzen, wenn die Positionierungshilfen wenigstens eine Seitenkante oder einen Durchmesser haben, der bzw. die kleiner als eine Abmessung des Querschnittes des Rohres oder Befestigungsmittels, insbesondere der Durchmesser des Rohres der Seitenwände ist. Es wird dabei in besonders vorteilhafter Weise ein geometrisches Zusammenwirken des Querschnittes des Rohres (Befestigungsmittels) und der Positionierungshilfe erreicht, welches eine besonders stabile Staffelung der Seitenwände ermöglicht. Insbesondere bei einer gewissen Schrägstellung der gestaffelten Seitenwände wird dabei ermöglicht, daß die überstehenden Rohre (Befestigungsmittel) der Seitenwände in die Positionierungshilfe schräg eingreifen. Durch das schräge Eingreifen der überstehenden Rohre (Befestigungsmittel) in die Positionierungshilfen wird auf sowohl konstruktiv als auch fertigungstechnisch besonders einfache Weise eine weitgehende Fixierung der gestaffelten Seitenwände auf der Bodenplatte bewirkt. Das Rohr (Befestigungsmittel) greift dabei teilweise in die Öffnung der Positionierungshilfe ein und bewirkt somit ein Verschneiden des beispielsweise kreisrunden Querschnitts des Rohres mit der beispielsweise runden oder rechteckigen Öffnung in der Bodenplatte. Ein Durchfallen des Rohres (Befestigungsmittels) durch die Öffnung der Positionierungshilfe wird insbesondere dadurch vermieden, daß wenigstens eine Seitenkante im Falle, daß die Öffnung rechteckig ist oder bei einer runden oder elliptischen Form der Öffnung ein Durchmesser kleiner als der Durchmesser und/oder eine der Querschnittsabmessungen des Rohres (Befestigungsmittels) ausgebildet ist. Damit ist in besonders vorteilhafter Weise ein schnelles Auflegen und Entnehmen der gestaffelten Seitenwände von der Transportvorrichtung gewährleistet.

Alternativ können die Positionierungshilfen statt durch Öffnungen auch durch Absätze oder Mulden an der Bodenplatte ausgeführt sein. Die Absätze oder Mulden bewirken, ähnlich wie die Öffnungen, eine Abstützung der gestaffelten Seitenwände an der Bodenplatte. Durch die Abstützung wird eine Fixierung der gestaffelten Seitenwände auf der Bodenplatte bewirkt, wodurch ein Verrutschen oder Herabfallen der gestaffelten Seitenwände von der Bodenplatte weitgehend verhindert wird.

Um eine Verschmutzung der transportierten Gegenstände und der Bodenplatte zu vermeiden, ist es besonders vorteilhaft, wenn die Absätze oder Mulden Wasserablauföffnungen aufweisen. Hierdurch können sich die Mulden der Absätze nicht mit Wasser füllen; was neben den oben beschriebenen Vorteilen außerdem den Vorteil hat, daß bei einem Stapeln der Bodenplatten aufeinander das Transportpersonal nicht unnötig naß wird.

Um die Lageroberfläche der Bodenplatte nicht mit Überständen zu versehen und somit eine ebene Lagerung der Gegenstände zu behindern, ist es besonders vorteilhaft, wenn die Positionierungshilfen unterhalb der eigentlichen Lageroberfläche der Bodenplatte angeordnet sind. Die Lagerung der Gegenstände auf der Bodenplatte wird somit nicht eingeschränkt und trotzdem die Staffelung der Seitenwände vorteilhaft ermöglicht.

Ebenfalls alternativ oder zusätzlich zu den zuvor beschriebenen Ausführungsmöglichkeiten der Erfindung können die Positionierungshilfen Rippen oder Wellen auf, in und/oder unterhalb der eigentlichen Lageroberfläche der Bodenplatte sein. Die Rippen oder Wellen bewirken ebenso ein sicheres Abstellen der gestaffelten Seitenwände auf der Bodenplatte, wodurch ein Verrutschen der Seitenwände auf der Bodenplatte und ein Herabfallen von der Bodenplatte weitgehend vermieden wird. Die Rippen oder Wellen könne auf der Lageroberfläche der Bodenplatte oder versenkt dazu angeordnet sein.

Weitere Vorteile der vorliegenden Erfindung sind in den folgenden Ausführungsbeispielen dargestellt. Es zeigt:
- **Figur 1**: eine perspektivische Ansicht einer Transportvorrichtung,
- **Figur 2**: versetzt gestapelte Bodenplatten,
- **Figur 3**: parallel gestapelte Bodenplatten,
- **Figur 4**: einen Ausschnitt aus einer erfindungsgemäßen Boden platte in Draufsicht,
- **Figur 5**: ein Schnitt durch eine Bodenplatte,
- **Figur 6**: eine weiterer Schnitt durch eine Bodenplatte,
- **Figur 7**: ein Schnitt durch eine Bodenplatte im Bereich einer Öff nung,
- **Figur 8 bis 11**: eine Draufsicht auf verschiedene Muldenformen,
- **Figur 12**: ein Schnitt durch die Mulde der Figur 11.
- **Figur 13**: eine perspektivische Ansicht einer erfindungsgemäßen Transportvorrichtung,
- **Figur 14**: eine Seitenansicht einer Transportvorrichtung,
- **Figur 15**: das Zusammenwirken einer Positioniereinrichtung mit einem Rohr einer gestaffelten Seitenwand,
- **Figur 16**: ein Ausführungsbeispiel einer Bodenplatte,
- **Figur 17**: eine weiteres Ausführungsbeispiel einer Bodenplatte,
- **Figur 18**: ein weiteres Ausführungsbeispiel einer Bodenplatte,
- **Figur 19**: ein weiteres Ausführungsbeispiel einer Bodenplatte.

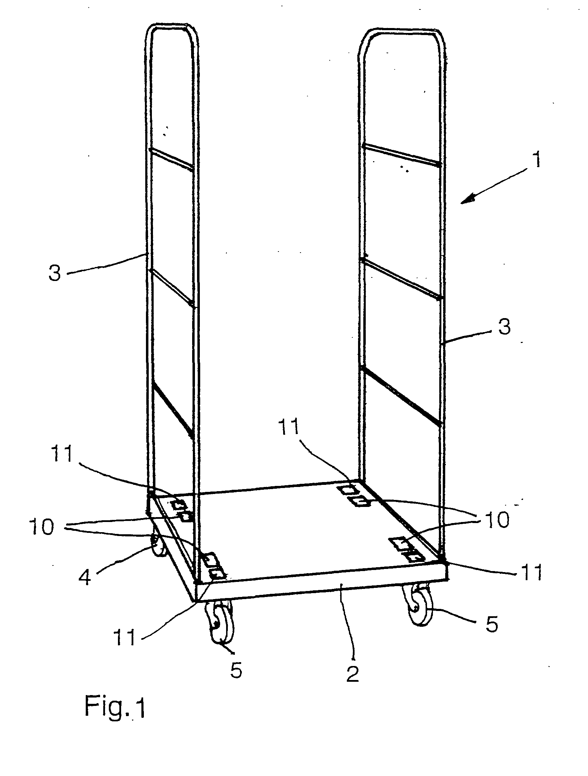

In Figur 1 ist eine Transportvorrichtung 1 in perspektivischer Ansicht dargestellt. Auf einer Bodenplatte 2 sind Gitterwände 3 abnehmbar befestigt. Unterhalb der Bodenplatte 2 sind Laufrollen angeordnet um die Transportvorrichtung verschieben zu können. Die Laufrollen bestehen aus zwei Bockrollen 4 und Lenkrollen 5. Mit Hilfe der Lenkrollen 5 ist ein einfaches Manövrieren der Transportvorrichtung möglich. Auf der Bodenplatte 2 sind verschiedene Einrichtungen zur Aufnahme der Laufrollen 4,5 beim Stapeln der Bodenplatte vorgesehen. Die Einrichtungen bestehen aus Öffnungen 10 und Mulden 11, welche in den Eckbereichen der Bodenplatte 2 vorgesehen sind. Die Öffnungen 10 und die Mulden 11 sind so angeordnet, daß das Stapeln der Bodenplatte 2 sowohl übereinander als auch versetzt zueinander erfolgen kann. Je nach Stapelart werden die vorgesehenen Öffnungen 10 und/oder Mulden 11 durch Einsetzen der Laufrollen 4,5 verwendet.

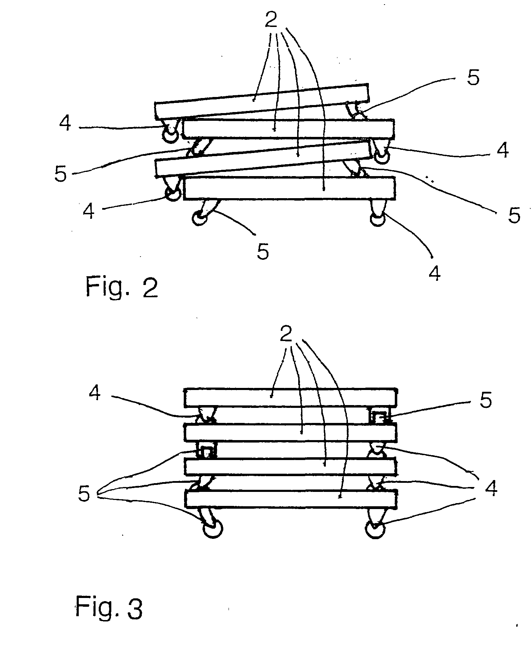

In Figur 2 ist ein versetztes Stapeln von Bodenplatten 2 dargestellt. Es sind hierbei die Gitterwände 3 von den Bodenplatten 2 abgenommen, so daß ein platzsparendes Stapeln erfolgen kann. Durch das versetzte Stapeln der Bodenplatten 2 ist eine stabile Lage des Stapels zu erhalten. Die Höhe des Stapels ist verglichen mit einer parallelen Stapelung geringer, so daß bei gleicher zur Verfügung stehender Raumhöhe mehr Bodenplatten 2 gestapelt werden können. Im Gegensatz zur parallelen Stapelung wird jedoch eine größere Projektionsfläche des Stapels benötigt, da die Bodenplatten 2 übereinander hinausragen und somit mehr Fläche benötigen als die einzelne Bodenplatte 2. Die jeweils obere Bodenplatte 2 stützt sich dabei mit einer ihrer Rollen in einer Mulde oder einer Öffnung der unteren Bodenplatte 2 ab. Das andere Rollenpaar hängt über den Rand der unteren Bodenplatte 2 hinab, so daß eine im Bezug zur unteren Bodenplatte 2 schräge Lage entsteht.

In Figur 3 ist ein paralleler Stapel von Bodenplatten 2 dargestellt. Die benötigte Grundfläche des Stapels entspricht im wesentlichen der Fläche der einzelnen Bodenplatte 2. Während bei dem Ausführungsbeispiel der Figur 2 stets die Lenkrolle in der Öffnung oder Mulde der darunter liegenden Bodenplatte 2 eingreift, ist bei dem Ausführungsbeispiel der Figur 3 die Position der Bodenplatte 2 beliebig. Es ist aus der Darstellung ersichtlich, daß die Bockrolle 4 am linken oder am rechten Ende der darunter liegenden Bodenplatte 2 angeordnet sein kann. Auch die Position, d.h. der Drehwinkel der Lenkrolle 5 ist im vorliegenden Ausführungsbeispiel beliebig. Die in der Bodenplatte 2 für die Lenkrolle 5 vorgesehene Mulde ist so, daß die Position der Lenkrolle 5 in jedem Falle eine sichere Stapelung der Bodenplatten 2 ermöglicht.

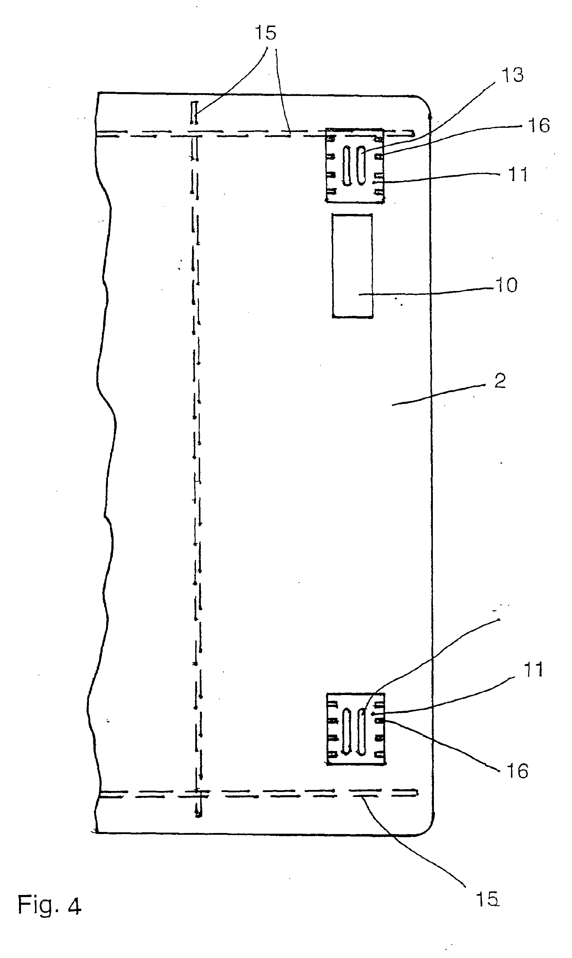

In Figur 4 ist eine Draufsicht auf einen Ausschnitt einer Bodenplatte 2 dargestellt. Aus dieser Ansicht sind eine Öffnung 10 sowie zwei Mulden 11 zu sehen. Die Öffnung 10 ist dabei bestimmt für das versetzte Stapeln der Bodenplatten 2. Die Lenkrolle oder die Bockrolle werden dabei in die Öffnung 10 eingesetzt, wodurch die obere Bodenplatte 2 über die untere Bodenplatte 2 an einem Ende hinausragt. Das Überragen der oberen Bodenplatte 2 ist derart, daß die an diesem Ende angeordnete Laufrolle über die untere Bodenplatte 2 hinaus steht. Dadurch ist das versetzte Stapeln der Bodenplatten 2 in einem stabilen Zustand möglich.

Die Mulden 11 sind für das parallele Stapeln der Bodenplatten 2 übereinander vorgesehen. Sie sind derart ausgebildet, daß die Bockrolle 4 in einer der beiden Mulden 11 zu stehen kommt, während die Lenkrolle 5 in einer definierten Stellung in der zweiten Mulde 11 aufgenommen wird. Jede der Mulden 11 weist Wasserablauföffnungen 13 auf, um einen Wasserstau in der Mulde 11 zu vermeiden. Hierdurch ist ein sauberes Arbeiten mit den Bodenplatten 2 ermöglicht. Die Mulden 11 weisen darüber hinaus Rippen 16 auf. Die Rippen 16 ragen seitlich in die Mulde 11 hinein. An den Rippen 16 stützen sich die in der Mulde 11 versenkten Laufrollen seitlich ab. Die Rippen können eine Schräge aufweisen, welche ein besonders leichteres Einführen der Rolle ermöglicht. Die Breite der Mulde ist dabei an ihrem oberen Ende größer als an ihrem unteren Ende. Durch die linien- oder bei einer Schräge der Rippen 16 punktförmige Berührung der Laufrollen 4,5 mit den Rippen 16 ist ein einfaches Einführen der Laufrollen 4,5 und Entnehmen der Laufrollen 4,5 möglich. Für den Fall, daß Schmutz in den Mulden 16 angesammelt ist, bewirken die Rippen 16, daß sich der Schmutz zwischen den einzelnen Rippen 16 ansammeln bzw. verschieben läßt und somit genügend Raum für eine sichere Lagerung der Laufrollen 4,5 ermöglicht. Es wird damit zuverlässig vermieden, daß durch eine unzulässige Ansammlung von Schmutz in der Mulde 11 die Tiefe, in welcher die Laufrolle 4,5 in der Mulde 11 aufgenommen werden soll, zu gering ist, so daß durch eine seitliche Bewegung des Stapels die Bodenplatten 2 voneinander rollen.

Um die Bodenplatten 2 für große Traglasten geeignet zu machen, weisen sie Verstärkungseisen 15 auf. Die gestrichelt dargestellten Verstärkungseisen 15 sind in die Struktur der Bodenplatte 2 eingearbeitet. Um genügend Raum für die Tiefe der Mulde 11 bzw. die Öffnung 10 zu gewährleisten sind die Verstärkungseisen 15 seitlich der Öffnung 10 oder der Mulden 11 angeordnet. In jedem Falle ist darauf geachtet, daß die Verstärkungseisen in einem Bereich in Bezug auf die Mulde 11 oder die Öffnung 10 ist, daß ein ausreichend tiefes Einsinken der Laufrolle 4,5 in die Öffnung 10 oder die Mulde 11 ermöglicht ist.

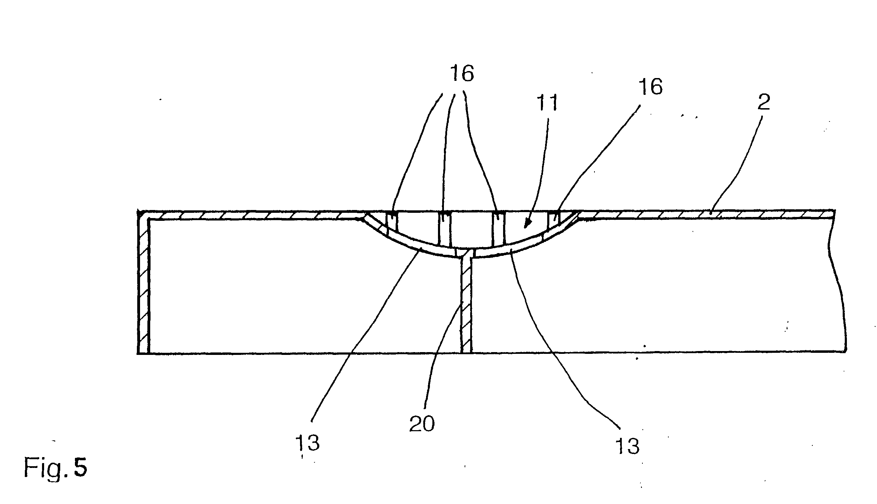

In Figur 5 ist ein Schnitt durch eine Bodenplatte 2 im Bereich einer Mulde 11 dargestellt. Die Mulde 11 ist als Kreissegment ausgebildet. Das Kreissegment entspricht im wesentlichen dem Radius der Laufrolle, welche in der Mulde 11 aufgenommen werden soll. Im Hintergrund sind im Bereich der Mulde 11 die Rippen 16 zu sehen, welche die seitliche Führung der Laufrollen übernehmen. Der Boden der Mulde 11 ist durchbrochen ausgebildet. Die Durchbrechungen bilden Wasserablauföffnungen 13, welche einen Wasserstau innerhalb der Mulde 11 vermeiden. Unterhalb der Mulde ist eine Verstärkungsrippe 20 vorgesehen. Durch die Verstärkungsrippe 20 wird sichergestellt, daß auch bei einem höheren Stapel und damit mit einer höheren Belastung der Bodenplatte 2 im Bereich der Mulde 11 eine Beschädigung der unteren Bodenplatte 2 vermieden wird.

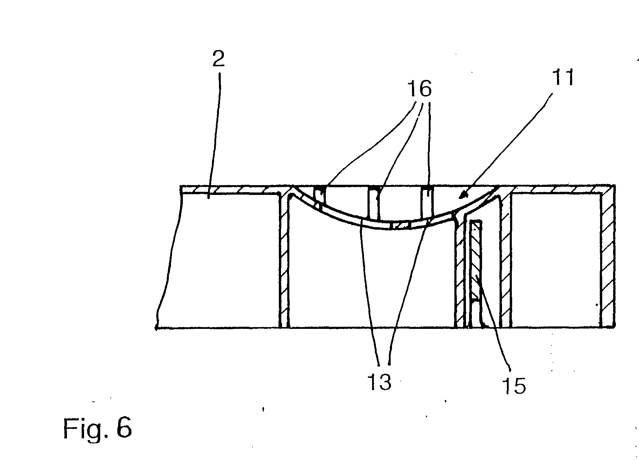

In Figur 6 ist der Schnitt durch die Bodenplatte 2 im Bereich einer weiteren Mulde 11 dargestellt. Auch hier sind Wasserablauföffnungen 13 und Rippen 16 vorgesehen. Unterhalb der Mulde 11 ist ein Verstärkungseisen 15 dargestellt, welches in die Struktur der Bodenplatte 2 eingearbeitet ist. Das Verstärkungseisen 15 ist im Seitenbereich der Mulde 11 vorgesehen, so daß das Verstärkungseisen 15 eine ausreichende Höhe aufweisen kann, welche geeignet ist die Bodenplatte 2 ausreichend zu verstärken. Andererseits ermöglicht das Verstärkungseisen 15, daß darüber die Mulde 11 ausreichend tief ausgebildet sein kann, um eine sichere Führung der darin gelagerten Laufrolle sicherzustellen.

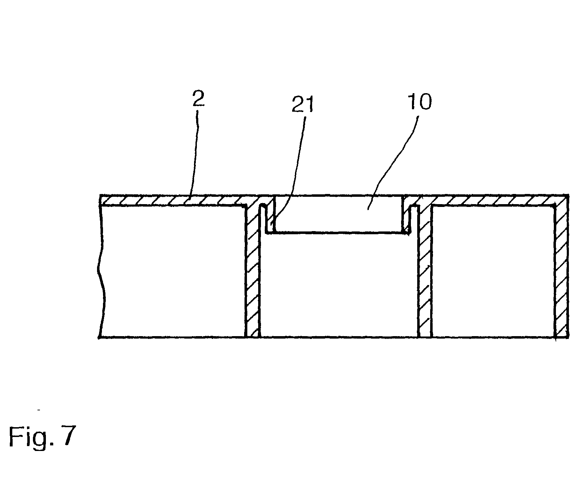

In Figur 7 ist ein Schnitt durch eine Bodenplatte 2 im Bereich einer Öffnung 10 dargestellt. Die Öffnung 10 weist eine von der Oberseite der Bodenplatte 2 abragende Umrandung 21 auf. Hierdurch wird auch bei einer oftmaligen Benutzung der Öffnung 10 zur Aufnahme von Laufrollen eine Beschädigung der Bodenplatte 2 vermieden, da eine großflächige Auflage innerhalb der Öffnung 10 vorgesehen ist.

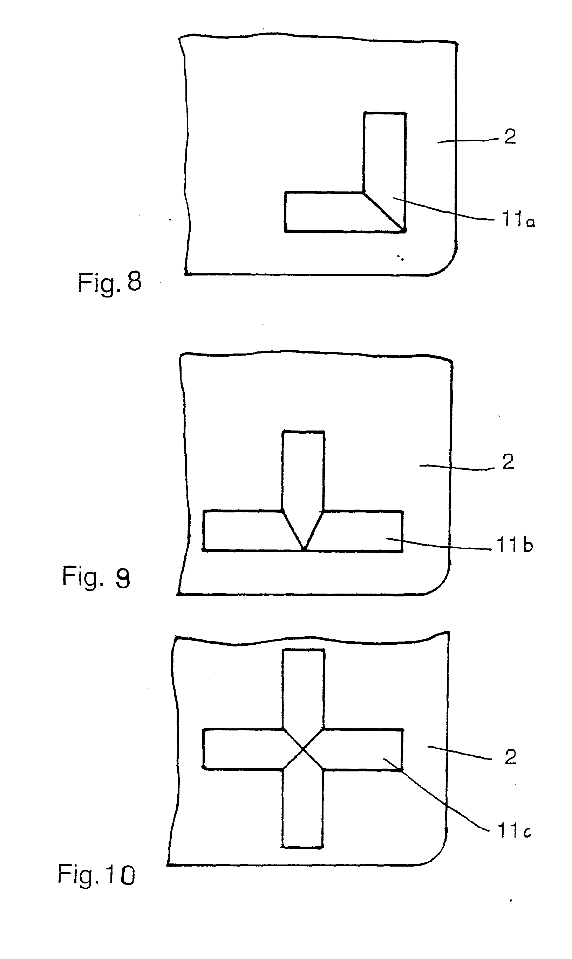

Figur 8 zeigt eine L-förmige Ausbildung der Mulde 11a. Durch die L-förmige Ausbildung kann die in der Mulde 11a aufzunehmende Laufrolle entweder in Richtung einer Außenkante der Bodenplatte 2 oder um 90° versetzt hierzu angeordnet sein. Dies ermöglicht insbesondere, daß die Lenkrolle 5 in einer variablen Position abgestellt werden kann. Steht die Lenkrolle im rechten Winkel zu der Bockrolle 4 innerhalb der Stapels, so wird eine besonders stabile Stapelung der Bodenplatten 2 erreicht, da in jeder möglichen Bewegungsrichtung eine Abstützung der Bodenplatte 2 über die Seitenflanken der Rollen 4 bzw. 5 erfolgt.

In Figur 9 ist eine T-förmige Mulde 11b dargestellt. Die Laufrollen 4,5 insbesondere die Lenkrolle 5 kann dabei in drei möglichen Positionen auf der Bodenplatte 2 angeordnet werden. Durch diese größere Anzahl der möglichen Positionen ist ein einfacheres Ausrichten der Bodenplatten aufeinander möglich, da auf die Position der Rolle weniger Rücksicht genommen werden muß, als wenn nur eine Position zulässig wäre.

In Figur 10 ist eine weitere Ausführung der Mulde 11c dargestellt. Die hier vorgesehene kreuzförmige Ausgestaltung der Mulde 11c erlaubt vier Positionen der Laufrollen 4,5 auf der darunter liegenden Bodenplatte 2.

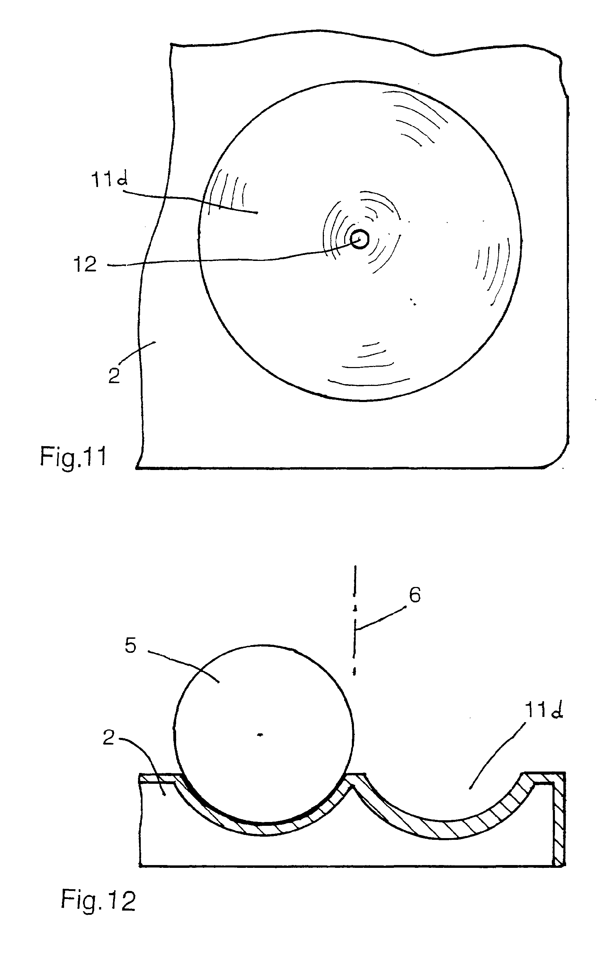

In Figur 11 ist eine weitere sehr universell einsetzbare Mulde 11d dargestellt. Die kreisringförmig gestaltete Mulde 11d stellt an die Position der Lenkrolle 5 keinerlei Anforderungen hinsichtlich ihrer Ausrichtung. Das Zentrum 12 der Mulde 11d stimmt dabei mit der horizontalen Drehachse 6 der Lenkrolle 5 überein. Hierdurch ist die Lenkrolle 5 um ihre Drehachse 6 beliebig positionierbar. In jeder der möglichen Positionen ist die Aufnahme der Lenkrolle 5 in der Mulde 11d gewährleistet. Hierdurch ist die Bedienungsperson an keinerlei vorherige Ausrichtung der Lenkrolle 5 gebunden.

Die folgenden Ausführungsbeispiele beschreiben Aufsteckwände, welche kreisrunde Querschnitte des Rohres 107 der Seitenwände 104 haben. Selbstverständlich sind auch andere Querschnitte bzw. Befestigungsmöglichkeiten der Seitenwände 104 an der Bodenplatte 104 möglich. Die Positionierungshilfen sollen jeweils mit der Unterseite der Seitenwände zusammenwirken.

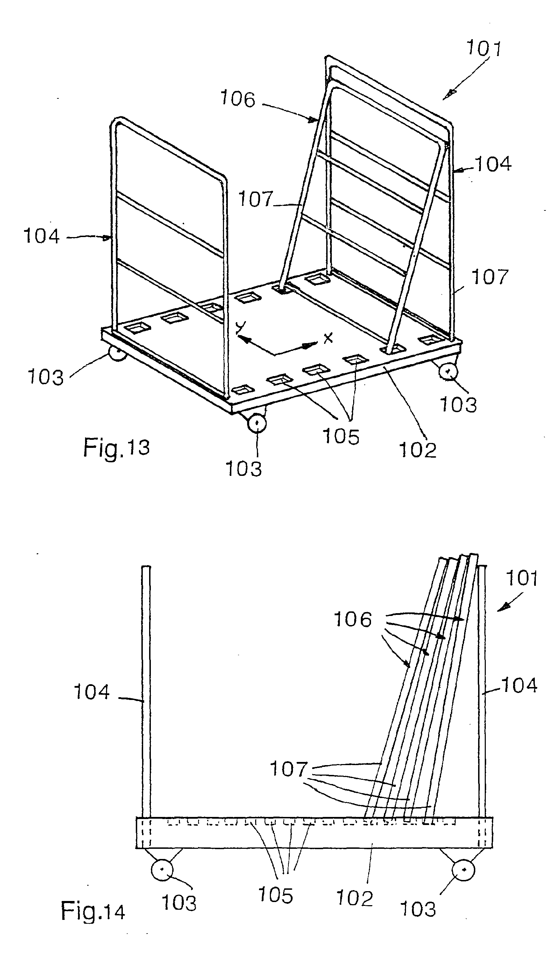

Figur 13 zeigt die perspektivische Darstellung einer Transportvorrichtung 101. Die Transportvorrichtung 101 besteht aus einer Bodenplatte 102, an welcher vier Räder 103 angeordnet sind. An den Ecken der Bodenplatte 102 sind Aufnahmen für zwei Seitenwände 104 vorgesehen. Die Seitenwände 104 sind bei dem vorliegenden Ausführungsbeispiel mittels den Enden ihrer Rohre 107 in die Aussparungen (110, siehe Figur 4 bis 6) der Bodenplatte 102 eingesteckt.

Auf der Bodenplatte 102 sind eine Vielzahl von Mulden 105 vorgesehen. Die Mulden 105 sind auf der Oberseite und entlang des Randes der Bodenplatte 102, die keine Seitenwände 104 trägt angeordnet. Der Abstand der Mulden 105 an den gegenüberliegenden Rändern der Bodenplatte 102 entspricht im wesentlichen dem Abstand der Rohre 107, welche in die Aussparungen 110 eingesteckt werden. Die Mulden 105 erstrecken sich von einer Seitenwand 104 bis zur anderen Seitenwand 104 auf der Bodenplatte 102. Dadurch ist ein Abstützen von gestaffelten Seitenwänden 106 auf der Bodenplatte 102 in den Mulden 105 gewährleistet. Die vorstehenden Rohre 107 der gestaffelten Seitenwand 106 greifen dabei in die Mulde 105 der Bodenplatte 102 ein.

Die Mulden 105 weisen einen besonderen Vorteil zum Transportieren von gestaffelten Seitenwänden 106 dann auf, wenn nicht die ganze Bodenplatte 102 mit gestaffelten Seitenwänden 106 gefüllt ist. Besonders in diesem nicht komplett gefüllten Zustand wird, durch die Abstützung der gestaffelten Seitenwände 106, ein weitgehend stabiles Transportieren dieser gestaffelten Seitenwände 106 gewährleistet. Die gestaffelten Seitenwände 106 rutschen auf der Oberfläche der Bodenplatte 102 nicht weg. Es besteht daher nicht die Gefahr, daß die gestaffelten Seitenwände 106 bei deren Transport von der Bodenplatte 102 der Transportvorrichtung 101 in x- oder y-Richtung verrutschen.

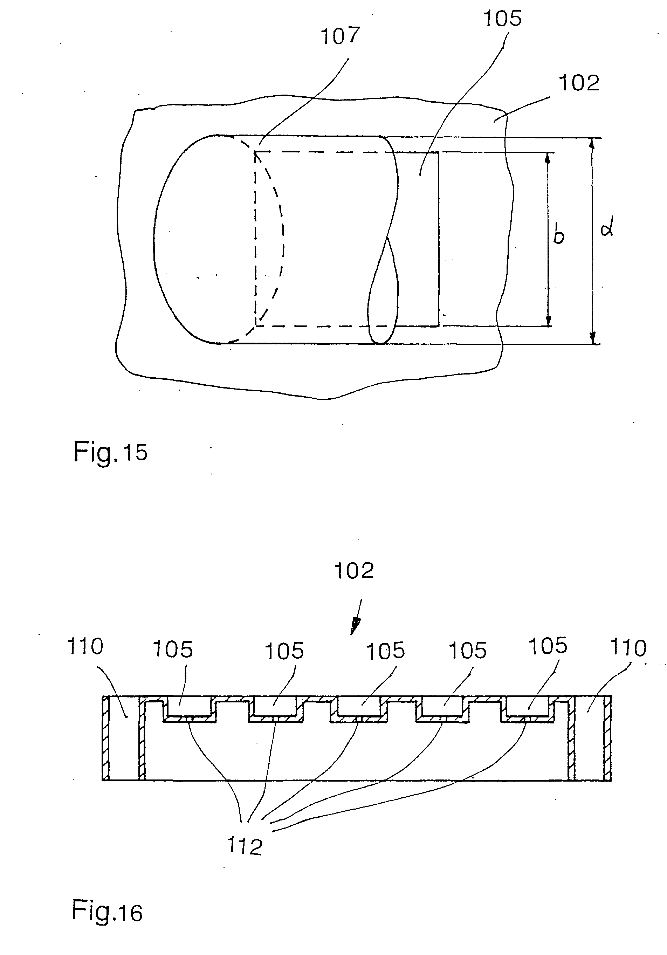

Figur 14 zeigt eine Transporteinrichtung 101 in Seitenansicht, bei welcher vier gestaffelte Seitenwände 106 transportiert werden. Die gestaffelten Seitenwände 106 stützen sich dabei einerseits an einer der beiden Seitenwände 104 mit ihren Oberseiten ab. Die Seitenwände 104 sind fest in der Bodenplatte 102 verankert und können somit die Last der angelehnten Seitenwände 106 aufnehmen. An der Unterseite der Seitenwände 106 verhaken sich die Enden der einzelnen Rohre 107 der Seitenwände 106 in den entsprechend dafür vorgesehenen Mulden 105. Die Mulden 105 sind so tief, daß die Rohrenden teilweise in den Mulden 105 versinken. Hierdurch ist eine stabile Staffelung der Seitenwände 106 auf der Bodenplatte 102 möglich. Es wird weder ein Verrutschen zwischen den Seitenwänden 104 auf der Bodenplatte 102 in x-Richtung ermöglicht, noch wird ein Herabrutschen der Seitenwände 106 in y-Richtung der Bodenplatte 102 erfolgen. Die Mulden 105 sind dabei so gestaltet, daß sie ein sicheres Aufnehmen der Rohrenden 107 der Seitenwände 106 ermöglichen:
Figur 15 zeigt einen Ausschnitt aus einer Bodenplatte 102. Die Bodenplatte 102 weist in diesem Ausschnitt die Mulden 105 eines Randes der Bodenplatte 102 auf. Auf der Mulde 105 ist das Ende eines Rohres 107 einer gestaffelten Seitenwand 106 dargestellt. Das Rohr 107 weist einen etwas größeren Durchmesser d als die Breite b der Mulde 105 auf. Hierdurch wird durch eine Schrägstellung des Rohres 107 beim Abstellen der Seitenwände 106 auf der Bodenplatte 102 ein teilweises Eintauchen des kreisrunden Rohrquerschnittes des Rohres 107 in der Mulde 105 bewirkt. Je näher die Breite b der Mulde 105 an den Durchmesser d des Rohres 107 angenähert ist, desto tiefer greift das Rohr 107 in die Mulde 105 ein. Selbstverständlich kann die Mulde 105 auch als durchgehende Öffnung ausgebildet sein oder einen anderen als den rechteckigen Querschnitt aufweisen. Eine gleiche Wirkung wird auch erzielt durch ein gegenüber dem Durchmesser d geringeren Länge c der Mulde bzw. Öffnung.

Figur 16 zeigt ein Ausführungsbeispiel einer Bodenplatte 102, welche im Bereich der Mulden 105 geschnitten ist. Im Randbereich der Bodenplatte 102 sind Aussparungen 110 zur Aufnahme gegenüberliegender Seitenwände 104 vorgesehen. Die Mulden 105 sind in im wesentlichen gleichen Abständen zwischen den Aussparungen 110 angeordnet. Um einen Wasserstau in der Mulde 105 zu vermeiden, weist jede der Mulden eine Wasserablauföffnung 112 auf. Hierdurch wird vermieden, daß sich Wasser in der Mulde 105 ansammelt und zu Verunreinigungen der zu transportierenden Güter führt. Die Mulden 105 sind so tief ausgebildet, daß die schräg gestaffelten Seitenwände 106 gut in die jeweilige Mulde 105 eingreifen können. Hierdurch wird eine ausreichende Sicherheit vor Verrutschen der Seitenwände 106 gewährleistet.

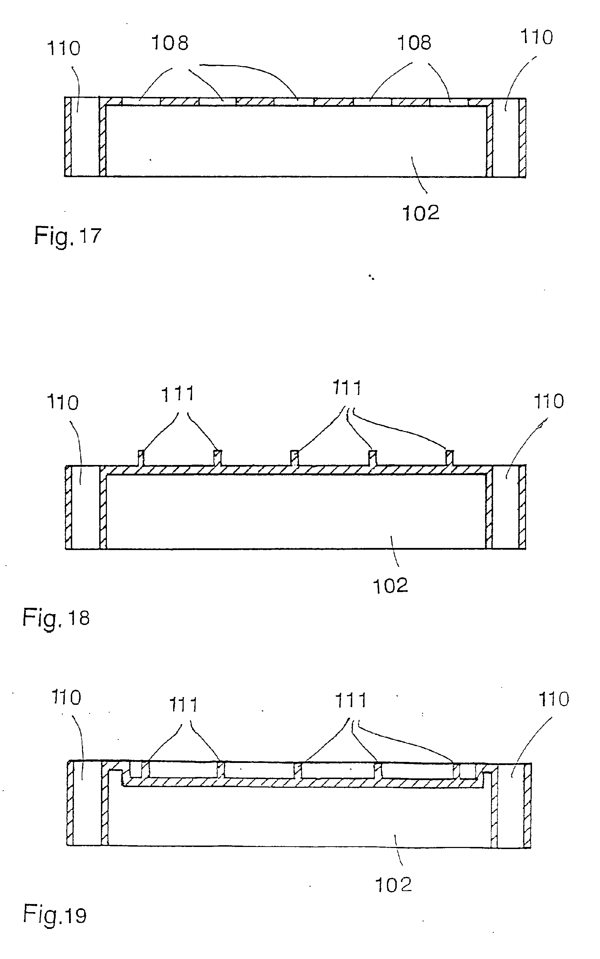

In Figur 17 ist ein weiteres Ausführungsbeispiel der Bodenplatte 102 mit Öffnungen 108 dargestellt. Zwischen den Aussparungen 110 sind eine Vielzahl von Öffnungen 108 vorgesehen, in welche in ähnlicher Weise wie zuvor beschrieben die Seitenwände 106 mit ihren Rohren 107 eingreifen. Die Öffnungen 108 haben dabei den Vorteil, daß sie unabhängig von der Tiefe, in welche das Rohr 107 in die Öffnung 108 eingreift, stets ausreichend Platz zur Verfügung stellen, um eine sichere Aufnahme des Rohres 107 zu ermöglichen. Selbstverständlich können wesentlich mehr als die hier gezeigten Öffnungen 108 an einer Kante der Bodenplatte 102 vorgesehen sein.

In Figur 18 ist ein weiteres Ausführungsbeispiel einer Bodenplatte 102 dargestellt. Hierbei ist die Oberseite der Bodenplatte 102 nicht mit Einsenkungen, Mulden oder Öffnungen versehen, sondern mit Rippen 111. Diese Rippen 111 dienen ebenfalls zum Abstützen der gestaffelten Seitenwände 106. Die Rohre 107 der Seitenwände 106 stützen sich auch hierbei an der Rippe 111 ab, indem beispielsweise die Rippe 111 in den Hohlraum des Rohres 107 eingreift.

In Figur 19 ist noch ein weiteres Ausführungsbeispiel einer Bodenplatte 102 dargestellt. Hierbei sind die Rippen 111 unterhalb der Oberseite der Bodenplatte 102 angeordnet. Damit ist eine ebene Ladefläche der Bodenplatte 102 erzielt, ohne daß die Positionierungshilfen eine möglicherweise störende Erhebung auf der Bodenplatte 102 darstellen.

Die Erfindung ist nicht auf die dargestellten Ausführungen beschränkt. So können beispielsweise wellenförmige Oberflächen im Bereich der Enden der Rohre 107 ebenfalls zu einem Abstützen der Seitenwände 106 dienen. Es können selbstverständlich auch einzelne der Ausführungsbeispiele miteinander kombiniert sein, wobei beispielsweise im Bereich der Rippen 111 ebenfalls Wasserablauföffnungen 112 vorgesehen sind. Die Positionierungshilfen können auch so gestaltet sein, daß die Rohre 107 in ein größeres Loch der Bodenplatte 102 eingesteckt und somit gestaffelt gelagert werden. Das Loch soll dabei aber so groß sein, daß kein Verhaken beim Einlegen und Entnehmen der Seitenwände aus der Positionierungshilfe entsteht. Ein Durchfallen der Seitenwände 106 wird dabei durch das Unterrohr der Seitenwände 106 verhindert, das auf der Bodenplatte aufliegt. Ist die Befestigungseinrichtung der Seitenwände nicht durch überstehende Rohre bewerkstelligt, sondern beispielsweise durch Bügel oder andere Befestigungseinrichtungen, so kann durch eine speziell auf die Unterseite der Seitenwand abgestimmte Positionierungshilfen die Abstützung dieser Seitenwände erfolgen.

Die Bodenplatten sind in den beschriebenen Ausführungsbeispielen aus Kunststoff dargestellt. Selbstverständlich können sie auch aus anderen Materialien, wie beispielsweise Holz oder Metall gefertigt sein.

Die vorliegende Erfindung ist nicht auf die dargestellten Ausführungsbeispiele beschränkt. Es sind Kombinationen der einzelnen Ausführungen selbstverständlich möglich. Auch die Art der Einrichtungen kann anders als in den dargestellten Ausführungsbeispielen gewählt werden.

## Patentansprüche

1. Transportvorrichtung mit einer Bodenplatte (2,102) und mehreren daran befestigten Laufrollen (4,5,103), dadurch gekennzeichnet, daß an der Bodenplatte (2,102) Mulden (11,105) und/oder Öffnungen (10,105) und/oder Rippen (111) vorgesehen sind, welche zum sicheren Stapeln von weiteren Bodenplatten (2,102) und/oder von Seitenwänden (104) der Transportvorrichtung dienen.

2. Transportvorrichtung mit einer Bodenplatte (2) und mehreren daran befestigten Laufrollen (4,5), sowie Einrichtungen (10,11) an der Bodenplatte (2) zum Stapeln mehrerer Bodenplatten (2) übereinander, insbesondere nach Anspruch 1, dadurch gekennzeichnet, daß die Einrichtungen (10,11) derart an der Bodenplatte (2) angeordnet sind, daß sie wahlweise ein versetztes oder paralleles Stapeln der Bodenplatten (2) übereinander erlauben.

3. Transportvorrichtung nach Anspruch 1, dadurch gekennzeichnet, daß Einrichtungen (10,11) auf der Oberfläche der Bodenplatte (2) vorgesehen sind zur Aufnahme von zwei Laufrollen (4,5) zum versetzten Stapeln.

4. Transportvorrichtung nach einem der vorherigen Ansprüche, dadurch gekennzeichnet, daß Einrichtungen (10,11) vorgesehen sind zur Aufnahme von allen Laufrollen (4,5) zum parallelen Stapeln.

5. Transportvorrichtung nach einem der vorherigen Ansprüche, dadurch gekennzeichnet, daß die Einrichtung wenigstens eine Öffnung (10) und/oder wenigstens eine Mulde (11) zur Aufnahme einer Laufrolle (4,5) ist.

6. Transportvorrichtung nach einem der vorherigen Ansprüche, dadurch gekennzeichnet, daß die Breite der Öffnung (10) und/oder Mulde (11) im wesentlichen der Breite der Laufrolle (4,5) entspricht.

7. Transportvorrichtung nach einem der vorherigen Ansprüche, dadurch gekennzeichnet, daß die Öffnung (10) und/oder Mulde (11) seitlich der aufgenommenen Laufrolle (4,5) Rippen (16) aufweist.

8. Transportvorrichtung nach einem der vorherigen Ansprüche, dadurch gekennzeichnet, daß die Rippen (16) eine die Öffnung (10) und/oder Mulde (11) nach unten verjüngende Schräge aufweisen.

9. Transportvorrichtung nach einem der vorherigen Ansprüche, dadurch gekennzeichnet, daß die Einrichtung die Laufrolle (4,5) in verschiedenen Positionen aufnimmt.

10. Transportvorrichtung nach einem der vorherigen Ansprüche, dadurch gekennzeichnet, daß die Laufrollen (4,5) Bock- und Lenkrollen sind und die Lenkrollen (5) beim Stapeln in verschiedenen Positionen in der Einrichtung aufgenommen werden können.

11. Transportvorrichtung nach einem der vorherigen Ansprüche, dadurch gekennzeichnet, daß beim parallelen Stapeln die Lenkrollen (5) in Richtung auf die Bockrollen (4) oder aufeinander zu zeigen.

12. Transportvorrichtung nach einem der vorherigen Ansprüche, dadurch gekennzeichnet, daß die Mulde (11) eine oder mehrere Wasserablauföffnung(en) (13) aufweist.

13. Transportvorrichtung nach einem der vorherigen Ansprüche, dadurch gekennzeichnet, daß die Einrichtungen (10,11) eine lageunabhängige Stapelung von Bodenplatten (2) ermöglichen.

14. Transportvorrichtung nach einem der vorherigen Ansprüche, dadurch gekennzeichnet, daß die Öffnung (10) und/oder Mulde (11) für die Lenkrolle (5) +-,T- oder L-förmig ausgebildet ist, wobei die einzelnen Schenkel in beliebiger, vorzugsweise aber rechtwinkeliger Ausrichtung zueinander sind.

15. Transportvorrichtung nach einem der vorherigen Ansprüche, dadurch gekennzeichnet, daß die Öffnung (10) oder Mulde (11) für die Lenkrolle (5) kreis- oder kreisring-förmig ausgebildet ist.

16. Transportvorrichtung nach einem der vorherigen Ansprüche, dadurch gekennzeichnet, daß Verstärkungen (15,20) der Bodenplatte (2) seitlich der Öffnung (10) oder Mulde (11) für die Laufrolle (4,5) angeordnet sind.

17. Transportvorrichtung nach einem der vorherigen Ansprüche, dadurch gekennzeichnet, daß Verstärkungen (15,20) der Bodenplatte (2) im Bereich der Öffnung (10) oder Mulde (11) für die Laufrolle (4,5) so weit unterhalb der Oberfläche der Bodenplatte (2) angeordnet sind, daß die Öffnung (10) oder Mulde (11) eine ausreichende Führung für die Laufrolle (4,5) aufweist.

18. Transportvorrichtung mit einer Bodenplatte (102), die für die Aufnahme wenigstens einer Seitenwand (104) bestimmt ist, insbesondere nach Anspruch 1, dadurch gekennzeichnet, daß an der Bodenplatte (102) in von der Seitenwand (104) abgewandter Richtung Positionierungshilfen (105,108,111) angeordnet sind um eine stabile Staffelung mehrerer Seitenwände (106) zu deren Transport zu gewährleisten.

19. Transportvorrichtung nach Anspruch 1, dadurch gekennzeichnet, daß die Positionierungshilfen (105,108,111) in beiden Richtungen (x- und y-Richtung) auf der Bodenplatte (102) wirken.

20. Transportvorrichtung nach einem der vorherigen Ansprüche, dadurch gekennzeichnet, daß die Positionierungshilfen (105,108,111) in einem im wesentlichen gleichen Abstand voneinander angeordnet sind.

21. Transportvorrichtung nach einem der vorherigen Ansprüche, dadurch gekennzeichnet, daß die Positionierungshilfen Öffnungen (108) in der Bodenplatte (102) sind, in welche die Seitenwand (106) eingreift.

22. Transportvorrichtung nach einem der vorherigen Ansprüche, dadurch gekennzeichnet, daß die Seitenwand (104) ein Aufsteckrahmen ist, welcher mittels über den Aufsteckrahmen nach unten hervorstehender Besfestigungsmittel, insbesondere Rohre (107) oder Bügel an der Bodenplatte (102) befestigt ist.

23. Transportvorrichtung nach einem der vorherigen Ansprüche, dadurch gekennzeichnet, daß die Positionierungshilfen (105,108,111) wenigstens eine Seitenkante (b,c) oder einen Durchmesser haben, der kleiner ist als eine der Abmessungen des Querschnittes oder des Durchmessers (d) des Rohres (107) oder der Befestigungsmittel der Seitenwände (106).

24. Transportvorrichtung nach einem der vorherigen Ansprüche, dadurch gekennzeichnet, daß die Positionierungshilfen Absätze oder Mulden (105) an der Bodenplatte (102) sind.

25. Transportvorrichtung nach einem der vorherigen Ansprüche, dadurch gekennzeichnet, daß die Absätze oder Mulden (105) Wasserablauföffnungen (112) haben.

26. Transportvorrichtung nach einem der vorherigen Ansprüche, dadurch gekennzeichnet, daß die Positionierungshilfen (105,108,111) unterhalb der eigentlichen Lageroberfläche der Bodenplatte (102) angeordnet sind.

27. Transportvorrichtung nach einem der vorherigen Ansprüche, dadurch gekennzeichnet, daß die Positionierungshilfen Rippen (111) oder Wellen auf, in und/oder unterhalb der eigentlichen Lageroberfläche der Bodenplatte (102) sind.
